Europäisches Patentamt

(19) European Patent Office

Office européen des brevets

(11) Publication number: **0 089 219**

**A2**

(12) # EUROPEAN PATENT APPLICATION

(21) Application number: **83301398.0**

(22) Date of filing: **14.03.83**

(51) Int. Cl.³: **B 01 D 23/04**

(30) Priority: **15.03.82 US 358020**

(43) Date of publication of application:
**21.09.83 Bulletin 83/38**

(84) Designated Contracting States:
**BE CH DE FR GB IT LI NL SE**

(71) Applicant: **PROTECTAIRE SYSTEMS COMPANY**
**1440 Holmes Road**
**Elgin Illinois 60120(US)**

(72) Inventor: **Russell, Frederick Ernest**
**576 Hilltop**
**Elgin Illinois 60120(US)**

(74) Representative: **Bayliss, Geoffrey Cyril et al,**
**BOULT, WADE & TENNANT 27 Furnival Street**
**London EC4A 1PQ(GB)**

(54) **Sludge filtration apparatus.**

(57) For paint spraying booths where water is circulated from a subsurface reservoir (12) into the booth for removal of airborne sludge particles, apparatus is provided for drawing sludge-laden water from the reservoir and filtering sludge from the water. Sludge-laden water is drawn from the reservoir through a suction head (24) maintained just below the surface of the water in the reservoir and pumped by a submerged pump (22) through an influent conduit (26) to the upper end of a filtration tank (18). The filtration tank is supported above the surface and has an open upper end (28), a lower outlet opening (32) and a filter element or bag (20) supported within the tank with freeboard space along its sides and bottom.

The influent conduit (26) has a downwardly extending spout (29) with a stream splitter (38) below the spout to disperse the stream at a narrow angle to the sides of the filter bag. The flow pattern in the filter bag created by the stream splitter results in an uneven distribution of sludge at the bottom of the bag assuring relatively sludge free regions at the bottom of the bag through which water filters readily. The filter bag, preferably formed of burlap weighing between about 6 and about 9 ounces per square foot, removes both large and small sludge particles while maintaining an adequate filtering rate for an extended period of time. When the filter bag is spent, the spout (29) is swung away from the open upper end of the tank allowing the filter bag to be removed and replaced.

The pump (22) is run at near maximum efficiency by maintaining its upwardly facing suction head (24) a predetermined distance below the surface of the water. The pump is mounted in a lift (48) for shifting between a lower position during a paint spraying phase of operations and an upper position during a filtering phase. A desired water level in the reservoir (12) is maintained during each phase of operations by a water inlet means having a valve which is opened to add water to the reservoir as needed.

./...

Fig. 1

## SLUDGE FILTRATION APPARATUS

The present invention relates generally to sludge removal apparatus and more particularly to apparatus for removing sludge from a subsurface reservoir.

Spray coating operations invariably disperse large quantities of overspray particles into the air. In order to maintain air quality standards, spray painting or similar spray coating operations are generally carried out in enclosed booths. Within booths for airborne particle removal, overspray particles are commonly trapped by flowing water in sprays, curtains, etc., and spraying booths utilizing flowing water have reservoirs at their lower ends from which water is drawn for use in the booths and into which water carrying trapped paint particles returns.

Trapped paint particles having high amounts of low density organic solvent are often lighter than water and float to the surface within the reservoir. Alternatively, if the particles are heavier than water and sink, they may be floated by aeration devices that produce bubbles which adhere to the particles and give the particles the needed bouyancy. For smaller reservoirs which are supported on the floor of the work area, floating sludge may be conveniently skimmed from the surface of the reservoir and into a collection bin such as that described in U.S. Patent No. 3,421,293. On the other hand, booths for painting large articles, e.g. automobiles, have large water reservoirs which are generally below the floor of the plant. Means must be provided for bringing sludge up from the subsurface reservoirs and concentrating the sludge for disposal.

Spray painting sludge is sticky, viscous and difficult to handle and tends to clog pumps, conduits, filters etc. The sludge includes tiny particles as well as globs of agglomerated material, all of which must be removed from the reservoir. The consistancy of the sludge varies widely depending on various factors such as the type of paint or coating used and the length of time which the sludge has been allowed to sit in the reservoir.

A general object of the present invention is to provide improved apparatus for removing sludge from a subsurface reservoir and concentrating it for disposal in waste drums or the like. It is a further object to provide sludge removal apparatus which occupies a relatively small amount of floor space adjacent the reservoir.

An upright sludge filtering tank is located closely adjacent and above a subsurface water reservoir. The tank contains an open "basket" lined with a burlap bag for filtering sludge-laden water. A pump, submerged within the reservoir, has a suction head maintained just below the surface of the water by adjustment of the level of the pump and the level of the water. Floating sludge is drawn through the suction head and pumped through an influent conduit to the top of the tank where the sludge-laden water is discharged into the open upper end of the tank and filter bag. A water splitter, associated with the discharge end of the influent conduit, reduces the intensity of the influent stream and directs it down the sides of the bag to the bottom where it collects in relatively narrow regions leaving other regions at the bottom of the bag which are generally free of sludge and through which water filters readily. After seeping through the bag, the filtered water returns via an outlet opening at the bottom of the tank and a connected effluent conduit back to the reservoir for reuse in the spraying booth. The discharge end of the influent conduit may be swung to the side permitting easy removal and replacement of the sludge-filled filter bag.

These and other objects and advantages will become more apparent from the following detailed description of the invention in reference to the accompanying drawings of which:

FIGURE 1 is a perspective view of a subsurface water reservoir and apparatus emobdying various features of the invention for removing sludge therefrom;

FIGURE 2 is a plan view of the filtering tank of the apparatus shown in FIGURE 1.

FIGURE 3 is a cross-sectional view of the filter bag used in the apparatus of FIGURE 1 demonstrating a typical sludge deposit pattern,

FIGURE 4 is a plan view of the filter bag and sludge deposit pattern of FIGURE 3, and

FIGURE 5 is a diagrammatic illustration of a system incorporating the sludge removal apparatus of FIGURE 1.

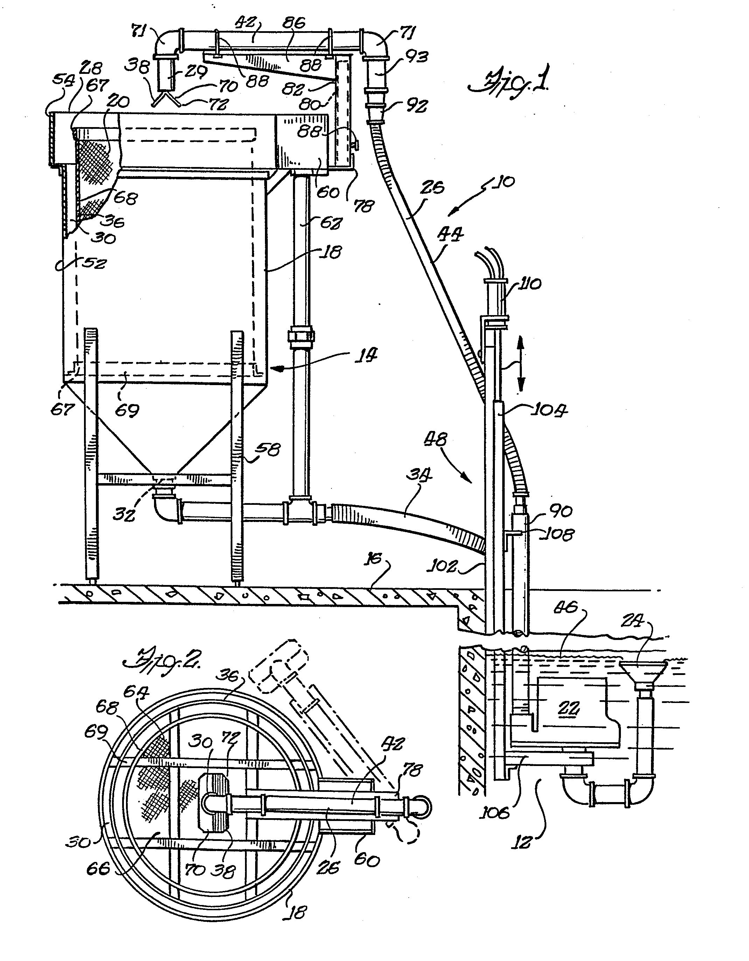

Illustrated in FIGURE 1 is apparatus, indicated generally at 10, for removing sludge from a subsurface water reservoir 12 of a paint spray booth. Water is drawn from the reservoir for use in the paint spray booth where sprays of the water trap overspray paint particles and carry them back to the subsurface reservoir. A filtering unit 14 adjacent the reservoir and supported above the surface or floor 16 includes a tank 18 and a filtering element 20 contained therein. A submerged pump 22 within the water reservoir 12 draws water and floating sludge through a suction head 24 located just below the surface 25 of the water and sends the sludge-laden water up through an influent conduit 26 that discharges a stream of sludge-laden water into an open upper end 28 of the tank. The filter element 20 is disposed below a spout 29 at the end of the influent conduit 26 for receiving the sludge-laden water stream. Filtered water flows from the filter bag 20 into a freeboard space 30 around and below the bag 20, through an outlet opening 32 at the lower end of the tank and through an effluent conduit 34 back to the reservoir.

In accordance with the present invention, it is found that a burlap bag 20 provides an excellent filter element for a filtration unit 14 used in conjunction with a subsurface reservoir 12 such as those commonly disposed below paint spraying booths for large articles and from which water is circulated to provide water sprays or curtains which remove airborne paint particles from the booths. It is found that a burlap filter bag 20 catches small as well as large sludge particles while permitting a reasonable flow of water therethrough for an extended period of time before becoming sufficiently clogged to require replacement. In order for the burlap filter bag to withstand the weight of the water discharged thereinto, the filter bag is supported by an open frame basket 36 which generally conforms to the shape of the interior of the tank 18 but is proportioned to provide the freeboard space 30 along its sides.

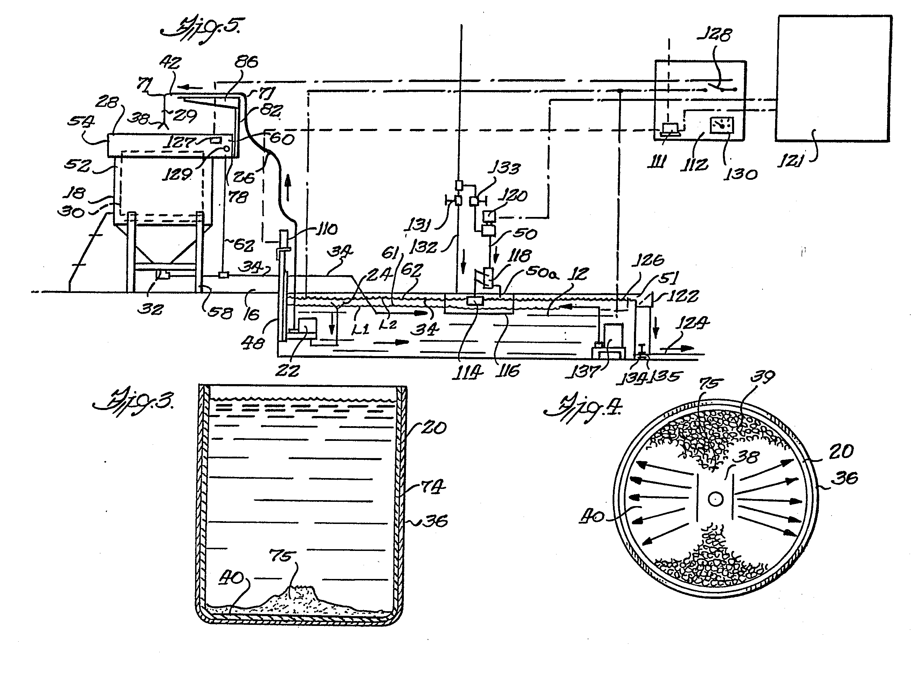

In accordance with another aspect of the invention, the stream of water, which is discharged by the influent conduit 26, is slowed and dispersed for entry into the filter bag 20. When sludge-laden water is discharged into the filter bag 20, the tendency is for the major portion of sludge to quickly cover the bottom of the bag clogging or "blinding" the filter material at the bottom of the bag and thus substantially reducing the filtering rate . A sludge deposit pattern in the filter bag 20, which promotes an efficient filtering rate for a prolonged time period, is achieved by placing a stream splitter 38 below the discharge spout 29 of the influent conduit 26 to direct a divided stream at a narrow angle to the sides of the bag. The sludge-laden water runs down the sides of the bag 20 and primarily accumulates in limited regions 39 (FIG. 4) of the bag bottom leaving generally sludge-free regions 40 at the bottom of the bag through which water filters readily thereby extending the run time of the filter bag. The splitter 38 also reduces the velocity of the stream from the spout 30 allowing a substantial flow rate to be maintained through the influent conduit 26 without bursting the burlap filter bag. Slowdown of the stream is also achieved by providing a discharge segment 42 at the spout end of the inlet conduit that is enlarged in diameter relative to those portions of the inlet conduit extending upward from the pump 22. The stream of sludge-laden water slows as it expands during entry into the enlarged-in-diameter discharge segment.

In accordance with another aspect of the invention, removal and replacement of the filter bag 20 through the upper end 28 of the tank 18 is facilitated by pivotably mounting the discharge segment 42 of the influent conduit 26 for swinging between a position (shown in solid in FIG. 2) whereat the spout 29 is centered over the filter bag and a position (shown in ghost in FIG. 2) remote from the bag providing unobstructed access to the upper end of the tank. An upwardly extending segment 44 of the infulent conduit 26 is flexible allowing the discharge segment 42 to be pivoted.

In accordance with another aspect of the invention, the suction head 24 of the pump 22 is maintained just below the surface 25 of water in the reservoir. The sludge removal apparatus 10 is operated throughout a spraying phase during which painting is carried out within the booth and a filtering phase following cessation of the spraying phase. Because of the substantial amounts of water which are continuously used in the booth during the spraying phase, the water level in the reservoir during the spraying phase is depressed several inches relative to the level during the filtering phase. The pump 22 is mounted on a lift 48 disposed along one side of the water reservoir and is raised or lowered according to the water level in the reservoir 12. A constant water level is maintained during the spraying phase by fresh water inlet means 50 (Fig. 5) which adds water to the reservoir to replace water withdrawn for use in the booth. Similarily, fresh water is added to the reservoir to raise the level of water when required during the filtering phase. The maximum water level during the filtering phase has an upper limit defined by a weir 51 (FIG. 5) over which excess water flows from the reservoir 12.

Referring now in greater detail to the illustrated embodiment of the invention, the tank 18 has a circular cross section throughout including a cylindrical body 52, an enlarged-in-diameter cylindrical upper portion 54 which facilitates filter bag replacement, and a conical lower portion 56 which terminates in the outlet opening 32. The tank is supported by legs 58 resting on the surface or floor 16 above the reservoir 12. Preferably the lower end of the tank is at least _____inches above the maximum level of water in the reservoir 12 to maintain a sufficient head in the effluent conduit 34. The tank 18 also includes a rectangular chamber 60 extending outward from the upper portion 54 for receiving overflow which may occur if the outlet opening 32 becomes clogged. Overflow water is removed through an overflow pipe 62 extending downward from the overflow chamber 60 and communicating with the effluent conduit 34.

The basket 36, which positions and supports the filter bag 20, is a framework of strips 64 (Fig. 2) formed into a cylindrical configuration with a bottom 66 and an upstanding sidewall 68. The upper end of the basket 36, like the upper end of the tank 18 is open. The basket is proportioned to generally maximize the size of the filter bag 20 it carries relative to the size of the tank 18 while providing the freeboard space 30 along its sides and bottom for filtered effluent. The outside diameter of the basket 36, accordingly, is slightly less than the inside diameter of the body 52 of the tank, and the height of the basket is slightly less than the height of the tank as measured from the lower edge of its cylindrical body. The strips 64, of which the basket 32 is formed, are preferably expanded steel or the like, and the basket is constructed to have as much open area as possible consistent with filter bag support in order to maximize filtering therethrough. The basket is supported within the tank by a grate 69 at the junction of the tank body 52 and lower conical portion 56.

Selection of an appropriate filter bag 20 for filtering sludge comprises an important part of the invention. Several materials were tested ranging form steel mesh through plastic cloth of various weaves and weights, but these are rejected for reasons of cost and/or efficiency. The filtering material should be relatively inexpensive as it is discarded when it becomes clogged with accumulated sludge. The material should be capable of trapping small particles of sludge without becoming quickly clogged or "blinded" in order to maintain a sufficient filtering rate for an extended period of time.

It is found that common burlap is an ideal fabric for forming the filter bag 20. Burlap is hydrophilic in nature thus tending to attract and accumulate the hydrophilic sludge particles. Numerous free fibers extend into the openings between the warp and weft and act as cilia trapping many of the smaller sludge particles.

Both the flow rate and filtering capacity are affected by the weight or mesh size of the burlap. Heavier burlap, of course, collects more particles than light burlap, but heavier weights of burlap, are found to become quickly clogged or "blinded" with particles. A suitable balance of flow rate is found to be provided with burlap weighing between about 6 and about 9 ounces per square foot and preferably about 7 1/2 ounces per square foot.

To prevent sludge from clogging the influent conduit 26, particularly at its elbows 71, and for efficient removal of sludge from the tank 18, a fairly high rate of flow through the influent conduit is maintained, e.g., between about 40 and about 60 gallons per minute. At this rate, a strong stream of sludge-laden water would, without appropriate counter measures, be discharged downward from the spout 29 into the filter bag 20. It is found that a very strong stream directed at the bottom of the filter bag 20 is unsatisfactory in that it tends to rupture the burlap. Even if the bag does not rupture, the rapid buildup of sludge along the entire bottom of the bag tends to "blind" the bottom of the bag reducing the filtering rate of the bag and reducing useful life or run time of the bag which can only be used so long as water seeps through the fabric at a sufficient rate that the influent does not overflow the top of the bag.

Excess influent velocity is mitigated somewhat by expansion of the influent stream as it enters the enlarged-in-diameter discharge segment 42 of the influent conduit 26. For example, a stream of sludge-laden water flowing at 7 feet per second through 1" diameter conduit slows to feet per second as it expands into 2" diameter conduit. Preferably, the diameter of the discharge segment 42 has at least three times the cross-sectional area of upwardly extending portions of the influent conduit.

Further reduction in stream intensity is achieved by the water splitter 38 consisting of a pair of panels 70 joined in an inverted "V" configuration contacting or closely adjacent the lower edge of the spout 29 bisecting the emerging stream. The stream splitter 38 also serves to provide a flow pattern which avoids uniform accumulation of sludge on the bottom of the bag 20 which would tend to cover the bottom of the bag and reduce the filtering rate through the bag. The panels 70 are each disposed at an angle relative to the spout 29 of between about 30° and about 60°, and the outer corners 72 are dog-eared upward. The influent stream flows along the panels and is dispersed by the inclined panels 70 with the dog-eared corners 72 at a relatively narrow angle towards the sides of the bag into two opposite regions of the sides 74 of the bag (Fig. 3). The sludge rolls downward along the sides 74 of the bag and are carried by the swift flow to the center 75 of the bag bottom and into the pair of side regions 39 outside the direct flow of sludge-laden water. While sludge piles up in the center and out-of-flow side regions 39, relatively little sludge accumulates in the regions 40 in the direct flow path. For example, whereas three inches of sludge may accumulate at the center of the bag bottom, only an inch will have accumulated in the regions 40 directly in the flow path. An adequate filtering rate is thereby maintained until a substantial amount of sludge has accumulated, and the life of the bag is extended.

When the bag 20 has accumulated sufficient sludge so that the level of water in the bag during the filtering phase rises to 2" from the top of the bag, the useful life of the bag has expired, and the pump 22 is deactivated to allow for replacement of the filter bag. The water level in the tank 18 is allowed to fall to a level below the bottom of the bag, the discharge segment 42 is swung to the side and the filter bag 20 is removed and replaced. Typically the major portion of sludge will accumulate in the filter bag during 15 min. periods of the filtering phases immediately following the spraying phases. Typically, the bag will be good for about 2-3 hours of heavy sludge filtering, and a single filter bag may be used for 3-5 days.

As a means to pivotally mount the discharge segment 42 of the influent conduit above the tank 18, a bracket 78 extends outward from the overflow chamber supporting an upwardly extending tube 80, and a tube 82 of greater diameter is telescoped over the upwardly extending tube. The outer tube 82 is attached at its upper end to the discharge segment 42 of the influent conduit by an elongated bracket 86 carrying a pair of U-brackets 88. The outer tube 82 is freely rotatable relative to the inner tube 80 whereby the discharge segment may be swung from side-to-side at least about 180°. At a center position of the discharge segment 42, the spout 29 is centered above the open upper end 28 of the tank 18 and the filter bag 20 contained therein. When swung to either side, the discharge segment 42 is entirely out of the way of the open upper end of the tank providing for unobstructed access thereto for removal of the filter bag 20. A screw 88, received in a threaded opening in the outer tube 82, may be tightened to frictionally engage the inner tube 80 locking the discharge segment 42 in place either centered above the tank or remote therefrom.

The upwardly extending segment 44 of the influent conduit 26 is flexible to permit swinging of the discharge segment 42 and is formed of fluted polymeric tubing which flexes and expands or contracts as the discharge segment is swung from side to side. At its lower end, the flexible segment 44 is connected to a rigid pipe 90 extending vertically from the pump 22. At its upper end, the flexible portion is connected to an adapter 92 which expands the diameter of the influent conduit from the narrow diameter of the upwardly extending flexible portion to the greater diameter of the discharge segment 42. The adapter, in turn, is connected via a short tube section 93 to an elbow 71 on the end of the discharge segment 42 opposite the spout 29.

The pump 22 is selected for its ability to handle sludge and elevate it from the subsurface reservoir 12 to above the upper end of the filter tank. It is problematic to pump paint sludge without the sludge clogging the pump due to its highly adhesive quality and its variable consistancy which runs from a cream like viscosity to something in the nature (depending on the age) of hard toast. A pump for sludge removal apparatus also requires a self-priming capability as it is frequently activated and deactivated. A preferred pump 22 is a recessed impeller submersible sump pump. The pump is modified to carry a conical suction head 24 which is positioned just below the surface 25 of the water and vacuums the floating sludge from the surface of the water. This type of pump is light weight, reasonably low cost and is easily modified to the requirements of sludge pumping operations. The submersible nature of the pump is highly desirable for operation in conjunction with spraying operations which produce large amounts of flammable vapor. A submerged pump does not emit sparks which could ignite the vapors and thus dispenses with the necessity of taking steps to make the booth "explosion proof".

The size of the conical suction head 24 is adjusted to the rate at which water is pumped through the influent conduit. Too small a suction head will not accept the larger chunks of sludge while too large a suction head will result in too low a velocity over the edge of the conical head and insufficient hydraulic gradient to draw in larger sludge chunks. For pumping at 50 gallons per minute, it is found that a suction head 24 having a 6" opening is generally optimal.

The sludge removal apparatus 10 is operated continuously during the spraying phase of operations. The circulation through the sludge removal apparatus during the spraying phase serves primarily to prevent the glue-like sludge particles from clogging the apparatus or permanently settling to the bottom of the reservoir 12. However, because of the high surface turbulence created in the reservoir by water circulation through the booth, relatively little removal of sludge occurs during this phase.

The major portion of sludge is removed during the initial 15 minute period of the filtering phase, following cessation of the spraying phase. The sludge removal phase is extended for a short period of approximately equal time thereafter during which substantially sludge-free water is circulated through the filtering apparatus and remaining fine particles are removed.

Illustrated in Figure 5 is a diagrammatic view of the sludge removal apparatus 10 and auxiliary apparatus for controlling the sludge removal apparatus and maintaining optimal filtering conditions.

An important factor in maintaining generally optimal filtering conditions is the position of the suction head 24 relative to the surface 25 of the water in the reservoir 12. In order to maintain adequate intake through the suction head 24, a hydraulic gradient or depression of the water level around the suction head must be created. If the suction head 24 is too far below the surface, insufficient hydraulic gradient is available to draw in surface water and floating sludge. On the other hand, if the suction head is too close to the surface, the suction head draws air and the capacity of the pump 22 is reduced. Preferably, the suction head is maintained between about one half inch and one and one half inches below the surface and most preferably about one inch below the surface.

The task of maintaining the suction head 24 optimally positioned relative to the surface 25 is complicated by the changing levels of water in the reservoir during operation of the booth. During the spraying phase, in which water is drawn from the reservoir for use in the booth, a variety of factors contribute to varying amounts of water being present in the reservoir. During the filtering phase, as sludge accumulates in the filter bag, an increasing amount of water is held in the filter tank, and without adjustment means, the water level in the reservoir would decrease. The auxiliary apparatus provides a first uniform water level L1 (Figure 5) during the spraying phase of operations, a second uniform water level L2 during the filtering phase of operations and means to maintain the suction head 24 at an optimal level below the surface 25 of the water.

As a means to adjust the elevation of the suction head 24 within the reservoir, the pump 22 is mounted on a lift 48 for raising and lowering the pump 22 and connected suction head 24. The lift 48 includes a stand 102 disposed along one side of the subsurface reservoir 12 and a bar 104 mounted for sliding upwardly and downwardly relative to the stand. The pump 22 is secured to the sliding bar 104 by a mounting bracket 106 extending from the lower end of the bar beneath the pump and by several brackets 108 connecting the bar to the riged influent pipe 90 extending upward therefrom. An air cylinder 110 at the upper end of the stand 102 is connected to the sliding bar 104 and is operable to shift the sliding bar 104 and attached pump 22 to a lower position during the spraying phase and an upper position during the filtering phase. The air cylinder 110 is actuated by a two-way solenoid valve 111 controlled by a sludge removal apparatus control panel 112.

As a means of preventing the level of the reservoir from falling below the level desired for the particular phase of operation, fresh water is added through the inlet conduit 50 as needed to replace water withdrawn from the reservoir. The level of water is detected by a floating sensor 114, and the sensor is protected from sludge by a float chamber 116 through which water but not large chunks of sludge may pass. The sensor 114 is operably connected to a water level control 118, and a solenoid 120 is actuated by a spray booth control panel 121 to allow flow through the inlet conduit as required.

The maximum level of water in the tank 18 is maintained by the weir 51 over which excess water in the reservoir flows into an overflow lip 122 connected to a drain conduit 124. To prevent sludge from flowing over the weir 51 and clogging the drain conduit 124, a baffel 126 extends through the reservoir surface closely adjacent the weir 51 preventing floating sludge from reaching the weir. The submersible pump 22 is manually actuated by an on-off switch 128 on the sludge removal apparatus control panel 112 before and after operations. A timer 130 is included in the control panel 112 to indicate to an operator that the filtering phase may be terminated. In addition, an automatic switch 127 connected to a floating sensor 129 deactivates the submersible pump 22 should the level in the overflow reservoir 60 of the filter unit 14 become to high.

An manual valve 131 in a side branch 132 of the fresh water inlet line is operable to fill the reservoir. The fresh water inlet line 50 can be shut off by a manual valve 133. The reservoir 12 is drained by opening a manual valve 134 in a short conduit 135 communicating the drain line 124 with the lower end of the reservoir.

While the action of the circulating pump 22 is sufficient for smaller reservoirs to circulate the water, for larger reservoirs, e.g., greater than 14' in length, it is preferred to use an auxiliary pump 137 to circulate the water in the reservoir. The auxiliary pump 137 may also be used to entrain air into the reservoir 12 to aerate the water and help to float sludge particles to the surface. The auxiliary pump 137, which is submerged at an opposite location from the sludge removal pump 22, is actuated by the on-off switch 128 on the sludge removal apparatus control panel 112 which actuates the sludge removal pump 22.

In a typical sludge removal system, useful for removing sludge from a subsurface reservoir, the cylindrical tank measures 35" from the lower end of its body to its upper end and another 12" to the outlet opening at the bottom of the conical portion. The inside diameter of the body measures 27" giving the tank a capacity of up to about 70 gallons. The basket has a height of 32" and has an outside diameter of 24" providing 1 1/2 inches of freeboard space along its sides.

The sump pump is rated at 1/2 horsepower and is operated to force water through the one inch diameter segment of the influent conduit at a rate of 7.0 feet per second resulting in a stream of sludge-laden water exiting the spout of a 2" diameter discharge section at a rate of 7.0 feet per second. The effluent conduit and overflow conduit are also 2" in diameter. At the above mentioned flow rate, 50 gallons of sludge-laden water are pumped per minute, and floating sludge from a 5' x 15' tank is accomplished in less than 15 minutes.

It should now be more fully appreciated that the filtering system provides a relatively simple and effective means for removing floating sludge from a subsurface reservoir. The systems occupies a relatively small space along the side of the spraying booth and is fully compatible with the operation of the spray booth allowing sludge to be removed during and particularly following spraying operations.

A number of problems associated with removing sticky viscous paint sludge are overcome by the invention. Selection of burlap as the filtering material provides for effective filtering of both large and small sludge particles, high filtering rate and extended filter life. The slowing and dispersing of the stream of sludge-laden water from the influent conduit prevents the burlap filter bag from bursting and creates a sludge-accumulation pattern along the bottom of the bag which prolongs the active filtering life of the bag. Pivotal mounting of the discharge segment of the inlet conduit provides for easy replacement of the spent filter bag. Selection, modification and mounting of the pump provides for generally trouble free removal of the difficult-to-handle sludge. Maintaining the suction head just below the surface of the water by raising and lowering the suction head and maintaining constant levels of water during the various phases of operations allows the pump to run at near maximum efficiency at all times.

While the invention has been described in terms of a preferred embodiment, modifications obvious to one with ordinary skill in the art may be made without departing from the scope of the invention.

Various features of the invention are set forth in the following claims.

CLAIMS:

1. Apparatus for removing sludge from a reservoir below a surface, said apparatus comprising a tank disposed above the surface, said tank having an open upper end and a lower outlet opening, an open frame basket having a bottom, an upstanding sidewall and an open upper end, means mounting said basket within said tank with freeboard space between said basket and said outlet opening, a burlap bag having an open upper end lining said basket, pump means for drawing sludge-laden water from the reservoir, influent conduit means connected to said pump and leading upward therefrom for conveying sludge-laden water to said burlap bag, and effluent conduit means leading from said outlet opening to the reservoir for returning filtered water to the reservoir.

2. Apparatus according to Claim 1 wherein said burlap bag is constructed of burlap weighing between about 6 and about 9 ounces per square foot.

3. Apparatus according to Claim 1 or Claim 2 wherein said pump is operable to produce a flow rate through said influent conduit of between about 5 and about 9 feet per second.

4. Apparatus according to any of Claims 1 to 3 wherein said influent conduit means comprises a narrow segment leading upward from said pump and a discharge segment at least three times the cross sectional area of said narrow segment.

5. Apparatus according to any of Claims 1 to 4 having a downwardly directed spout at the end of said influent conduit and a stream splitter means disposed below said spout for dispersing the stream of water from said discharge segment to the sides of said bag.

6. Apparatus according to any of Claims 1 to 5 wherein said influent conduit means has a discharge segment and means pivotably mounting said discharge segment for swinging between a position above said bag and a position remote from said bag to facilitate removal of said bag.

7.    Apparatus according to any of Claims 1 to 6 wherein said tank is cylindrical and said basket is cylindrical with an outside diameter less than the inside diameter of said tank.

8.    Apparatus for removing sludge from a water reservoir below a surface, said apparatus comprising a tank disposed above the surface having an open upper end and a lower outlet opening a removable filter element, means mounting said removable filter element in said tank with freeboard space between said filter element and said outlet opening, pump means for drawing sludge-laden water from said reservoir, upwardly extending conduit means connected to said pump for conveying sludge-laden water above said open end of said tank, discharge conduit means connected to said upwardly extending conduit means for directing sludge-laden water to said filter element, means mounting said discharge conduit means above said tank for pivoting between a position disposed above said filter element and a position remote from said filter element to facilitate removal of said filter element, and effluent conduit means leading from said outlet opening to the reservoir for returning filtered water to the reservoir.

9.    Apparatus according to Claim 8 wherein said upwardly extending conduit means is flexible.

10.    Apparatus for removing sludge from water reservoir below a surface, said apparatus comprising a tank disposed above the surface having an open upper end and a lower outlet opening, a removable filter element means mounting said removable filter element with freeboard space between said filter element and said outlet opening, a submerged pump disposed within said reservoir a suction head connected to said pump, means for adjusting the height of said suction head for positioning said suction head below the surface of the water in the reservoir, influent conduit means connected to said pump and leading upward therefrom for discharging sludge-laden water into said filter element, and effluent conduit means leading from said outlet opening to the reservoir for returning filtered water to the reservoir.

11. Apparatus according to Claim 10 wherein said adjustment means comprises a lift which raises and lowers said pump.

12. Apparatus according to Claim 11 wherein said lift comprises a stand, a member mounted for sliding upwardly or downwardly relative to said stand, means mounting said pump from said member and means to lower and raise said member.

13. Apparatus according to any of Claims 10 to 12 wherein said pump is a recessed impeller sump pump.

14. Apparatus according to Claim 13 wherein said suction head is conical.

15. Apparatus according to any of Claims 10 to 14 wherein said pump delivers sludge-laden water at a rate of between about 5 and about 9 feet per second through said influent conduit means.

16. Apparatus for removing sludge from a water reservoir below a surface, said apparatus comprising a tank disposed above the surface, having an open upper end and a lower outlet opening, a filter element, means mounting said filter element within said tank with freeboard space between said filter element and said outlet opening, pump means for drawing sludge-laden water from the reservoir, an influent conduit connected to said pump and leading upward therefrom, a discharge spout at the end of said influent conduit, means mounting said spout generally centered above said filter element and directed downward toward said filter element, a splitter means disposed below said spout for distributing the downwardly directed influent from said spout to the sides of said filter bag, and effluent conduit means leading from said outlet opening back to the reservoir for returning filtered water to the reservoir.

17. Apparatus for removing sludge from a water reservoir below a surface, said apparatus comprising a filtering unit disposed above the surface, a pump having an upwardly facing suction head, conduit means connecting said pump to said filtering unit, return conduit means connecting said filtering unit to said reservoir, and means to maintain said suction head a predetermined distance below the surface of the water in said reservoir.

18. Apparatus according to Claim 17 wherein said maintaining means includes means to raise and lower said suction head.

19. Apparatus according to Claim 18 wherein said maintaining means is a pump lift.

20. Apparatus according to any of claims 17 to 19 wherein said maintaining means includes means to sustain a desired water level in said reservoir.

21. Apparatus according to Claim 20 wherein said sustaining means includes a means to sense the level of water in said reservoir and means to add fresh water to said reservoir when the water falls below a predetermined level.

22. Apparatus according to Claims 20 or Claim 21 wherein said sustaining means includes a weir over which excess water in said reservoir flows.

0089219

1/2

Fig.1.

Fig.2.

Fig.5.

Fig.3.

Fig.4.